# EUROPEAN PATENT APPLICATION

(11) **EP 4 180 226 A1**
(43) Date of publication of application: **17.05.2023**
(21) Application number: 21208082.4
(22) Date of filing: 12.11.2021
(51) Int. Cl.: B33Y 70/00, B29C 64/153, C08G 63/672

(54) **THERMOPLASTIC ELASTOMER POWDERS FOR ADDITIVE MANUFACTURING AND THE USE THEREOF**

(71) Applicant: Covestro (Netherlands) B.V., 6167 RD Geleen (NL)
(72) Inventor: JANSSEN, Mark, 6167 RD Geleen (NL); PEPELS, Mark Petrus Franciscus, 6167 RD Geleen (NL)
(74) Representative: V.O.

(57) **Abstract**

The invention is in the field of additive manufacturing.

According to a first aspect of the invention, there is provided an additive manufacturing process for producing a printed article, comprising the step of sintering a powder composition comprising a thermoplastic elastomer,
wherein the powder composition has a melting onset temperature T_{m,onset} and a melting peak temperature T_{m,peak}, which are measured according to ISO 11357-1/3 (2009), wherein T_{m,peak} minus T_{m,onset} is 30 °C or less; and wherein a test article printed from the powder composition has a rebound resilience of 50 % or more, measured according to DIN 53512.

According to a second aspect of the invention, there is provided a method of manufacturing a powder composition suitable for additive manufacturing sintering processes comprising the steps of:
(a) providing a starting material comprising a thermoplastic elastomer;
(b) heating the starting material of step (a) or the size-reduced material of step (c) to a temperature sufficient to increase the melting onset temperature of the material, thereby obtaining an annealed material; and
(c) reducing the size of the starting material of step (a) or the annealed material of step (b) into a powder having a D50 particle size value of 20-150 µm, thereby obtaining a size-reduced material,
wherein size reduction step (c) is performed before or after heating step (b).

## Description

### Field of the invention

The invention is in the field of additive manufacturing. The invention relates to an additive manufacturing process, a method of manufacturing a powder composition, to a powder composition, and to an article of manufacture.

### Background

Thermoplastic elastomer materials are known for their elastic, or "rubbery" properties, and are used for many different applications in which elastic properties are desired, such as shoe soles and medical products. Articles of thermoplastic elastomer materials are typically produced using injection molding.

It is desirable to also use thermoplastic elastomers for rapid prototyping. It is also desirable to be able to produce functional parts from thermoplastic elastomers in a fast and efficient way. Therefore, it would be useful if thermoplastic elastomers materials could be used in additive manufacturing techniques, such as selective laser sintering (SLS) or other powder bed fusion techniques.

However, the properties of thermoplastic elastomer materials typically make them not very well suited for additive manufacturing. It is for instance difficult to produce thermoplastic elastomer powders with good flowability, which is required for additive manufacturing processes in which powdered material is used, such as SLS.

Selective Laser Sintering of thermoplastic elastomers is for instance described in US-A-6 110 411.

Another challenge with thermoplastic elastomers is that these materials typically have only a small temperature range in which they can be sintered effectively, known as their sinterability region, or sinter window. If the temperature of the powder is too low during the additive manufacturing process, the sintered parts typically do not have the desired mechanical properties. Another downside of using a too low temperature is that deformation of the printed part can occur due to unwanted or too fast crystallization of the material. On the other hand, if the temperature of the powder is too high, unwanted sticking and formation of powder cakes can occur, and the flow properties of the powder can be negatively influenced. In addition, a too high cohesion of the resulting powder cake decreases the cleanability of the additive manufactured parts, and limits the recyclability of the powder. A possible approach for improving elastic properties of the printed part without having to maintain the powder at a higher temperature during the sintering process is to increase the energy density of the sintering process, which can partly compensate for the lower temperature. However, increasing the energy density of the sintering process can lead to severe smoking, yellowing and even degradation of the polymer and thus of the produced part. Because of that, sintering of powders with a narrow sinterability region is challenging.

Problems can also occur in case thermoplastic elastomer powders are used which have a sinterability region at too high temperatures. A sinterability region at higher temperatures means that, during the sintering process, the powder needs to be maintained at a higher temperature. Maintaining the powder at high temperatures results in high energy use, and maintaining a constant temperature becomes more different at higher temperatures. Furthermore, when using higher temperatures, the total build time increases due to longer heat up and cool down times. If the powder is kept at temperatures below the sinterability region, the manufactured part may have poor elastic properties. Additionally, for some materials, a risk when performing sintering at high temperatures is that when fresh powder is added, the temperature of the sintered part can drop below the sinterability region, causing unwanted crystallization which can result in deformation of the manufactured part and/or insufficient interlayer adhesion during the sintering process. In addition, keeping the powder at a high temperature for extended periods can result in degradation of the material, for instance due to oxidation of the material. This degradation can affect the manufactured part, as well as the remaining powder, making it difficult to re-use or recycle the remaining powder in subsequent builds, resulting in inefficient use of raw materials. In order to prevent degradation by oxidation at high temperatures, it is sometimes necessary to perform additive manufacturing under an inert gas atmosphere, which complicates the additive manufacturing process.

Another issue that is particularly problematic when using elastomeric powders in 3D printing processes is the fact that such powders more readily agglomerate than non-elastomeric powders and do not have a good "flowability", which is an important property of powders for 3D printing. 3D printing using powders that do not have the right flowability can result in manufactured parts having low density, which can seriously impair the mechanical properties of such parts.

In view of the above, an objective is to provide additive manufacturing processes and/or powders for such additive manufacturing processes using which highly elastic, rubbery parts can be produced.

Alternatively or additionally, it is an objective to provide powders for additive manufacturing with good and/or improved flowability.

A further objective is to provide powders having a sufficiently large sinterability region, and/or a sinterability region in which excessive degradation of the powder is reduced.

### Brief summary of the invention

According to a first aspect of the invention, there is provided an additive manufacturing process for producing a printed article, comprising the step of sintering a powder composition comprising a thermoplastic elastomer,
wherein the powder composition has a melting onset temperature T_{m,onset} and a melting peak temperature T_{m,peak}, which are measured according to ISO 11357-1/3 (2009), wherein T_{m,peak} minus T_{m,onset} is 30 °C or less; and wherein a test article printed from the powder composition has a rebound resilience of 50 % or more, measured according to DIN 53512.

The inventors have found that selecting a thermoplastic elastomer with a certain combination of elastic properties and melting behavior enables improved additive manufacturing of articles with elastic properties.

According to a second aspect of the invention, there is provided a method of manufacturing a powder composition suitable for additive manufacturing sintering processes comprising the steps of:
(a) providing a starting material comprising a thermoplastic elastomer;
(b) heating the starting material of step (a) or the size-reduced material of step (c) to a temperature sufficient to increase the melting onset temperature of the material, thereby obtaining an annealed material; and
(c) reducing the size of the starting material of step (a) or the annealed material of step (b) into a powder having a D50 particle size value of 20-150 µm, thereby obtaining a size-reduced material,
wherein size reduction step (c) is performed before or after heating step (b).

As used herein, 'heat treatment' and 'annealing' are used interchangeably to refer to step (b) of the method according to the second aspect of the invention.

The inventors found that when the starting material comprising a thermoplastic elastomer is annealed prior to or after converting the material into a powder, the properties of the powder are more suitable for additive manufacturing processes, such as SLS.

There is also provided a powder composition comprising a thermoplastic elastomer suitable for additive manufacturing sintering processes, preferably obtainable by the method as described herein.

A further aspect of the invention is an article of manufacture obtainable by an additive manufacturing process as described herein.

### Brief description of the drawings

Figure 1 shows differential scanning calorimetry (DSC)-curves of a powder composition comprising an annealed and a non-annealed thermoplastic elastomer, respectively.
Figure 2 and 3 illustrate additive manufacturing of hollow cubes, showing the degree of caking of the powder inside the hollow cubes.
Figure 4 shows the printed part used in the cleanability test of example 5.

### Detailed description

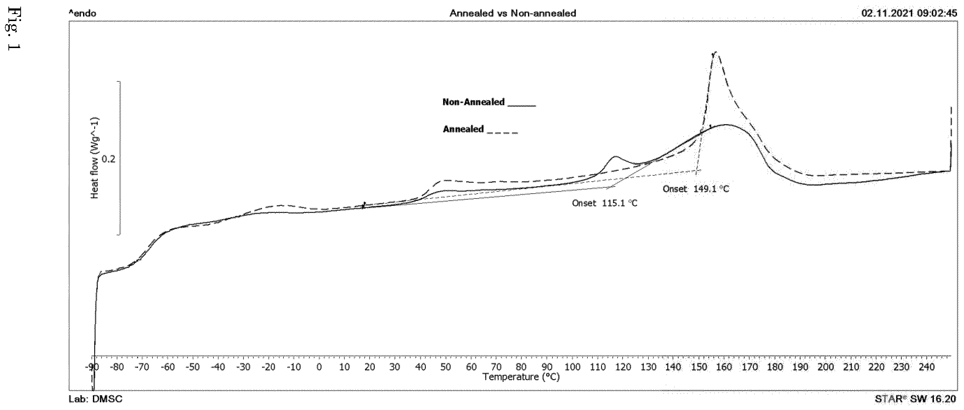

The present invention is directed to additive manufacturing of powder compositions comprising a thermoplastic elastomer and to providing powders compositions comprising a thermoplastic elastomer with enhanced suitability for additive manufacturing sintering processes. Commonly-described characteristics of polymer powders are crystallization temperature (T_{c}) and melting point temperature (Tₘ). However, the inventors posit that a powder's melting point onset temperature (T_{m,onset}) and crystallization onset temperature (T_{c,onset}) are more critical determinants for assessing its potential suitability for use in additive manufacturing processes. T_{m,onset} is the temperature point at which melting starts to occur, whereas T_{c,onset} is the temperature point at which crystallization starts to occur. This is because the difference between these values, expressed mathematically herein as ΔT = (Tm,onset - Tc,onset), represents the temperature region within which inventors surmise the powder will be most suitable for use in additive manufacturing processes. A powder's ΔT, referred to herein synonymously as its sinterability region, is preferably maximized in order to ensure the powder will behave in a consistent fashion despite the natural temperature variabilities in the additive manufacturing process in which it is used. Powder compositions that are used or produced according to the present invention may exhibit larger sinterability regions than other thermoplastic elastomer powders. In order to achieve this, powders of the present invention may exhibit higher T_{m,onset} values. They may alternatively exhibit lower T_{c,onset} values. Further, they may simultaneously exhibit both higher T_{m,onset} values and lower T_{c,onset} values. Preferably, melt onset and crystallization onset temperatures are measured according to ISO 11357-1/3. As used herein, the melt onset temperature is defined as the intercept of the tangent at the inflection point of the highest melting peak and the tangent of the baseline, based on a differential scanning calorimetry (DSC) heating curve. Determining the melt onset temperature based on a DSC curve is illustrated in figure 1. Analogously, as used herein, the crystallization onset temperature is defined as the intercept of the tangent at the inflection point of the main crystallization peak and the tangent of the baseline, based on a DSC cooling curve.

According to the invention, an additive manufacturing process for producing a printed article is provided, comprising the step of sintering a powder composition comprising a thermoplastic elastomer,
wherein the powder composition has a melting onset temperature T_{m,onset} and a melting peak temperature T_{m,peak}, which are measured according to ISO 11357-1/3 (2009), wherein T_{m,peak} minus T_{m,onset} is 30 °C or less; and wherein a test article printed from the powder composition has a rebound resilience of 50 % or more, measured according to DIN 53512.

Additive manufacturing processes involving powder as the build medium, such as Selective Laser Sintering (SLS), High Speed Sintering (HSS), or MultiJetFusion (MJF) generally involve the application of a high density, high energy source of radiation, such as a laser, to selectively melt or fuse a portion of powder into a desired shape. A control mechanism serves to direct both the path and intensity of the laser in order to fuse powder disposed within specified boundaries, often on a layerwise basis. Each layer, or "slice", represents a cross-section of the final component to be fabricated at a specified thickness. Machine controls operate selectively to sinter sequential layers of powder, producing a completed part comprising a plurality of slices sintered together.

Preferably, the machine control mechanism is computer-directed, and utilizes CAD files of varying formats to determine the defined boundaries for each slice.

Parts may be produced by depositing a first portion of sinterable powder onto a target surface of a part bed, scanning the directed laser over the target surface, and sintering a first layer of the first portion of powder on the target surface to form the first slice. The powder is thus sintered by operating the directed laser beam within the boundaries defining the first slice, with sufficient energy, or fluence, to sinter the powder. The first slice corresponds to a first cross-sectional region of the part.

A second portion of powder may then be deposited onto the surface of the part bed and that of the first sintered slice lying thereon, and the directed laser beam scanned over the powder overlying the first sintered slice. A second layer of the second portion of powder is thus sintered by operating the laser beam within the boundaries which then define the second slice. The second sintered slice is formed at a temperature sufficient to sinter it to the first slice, with the two slices fusing together into a single portion of the object to be built. Successive layers of powder are deposited onto the previously sintered slices, with each layer being sintered in turn to form an additional slice.

The additive manufacturing method may comprise the steps of:
a. providing a layer of powder;
b. optionally, selectively depositing a liquid composition onto the layer of the powder, wherein at least one of the powder or liquid composition comprises a fusing agent;
c. applying electromagnetic radiation to at least one of:
   (i) a specified location on the layer of the powder, or
   (ii) a location at which the liquid composition which has been selectively deposited onto the powder;
   wherein the particulate composition undergoes sintering in at least some of the locations where the electromagnetic radiation and/or the liquid composition has been applied to form a fused section in accordance with computer data corresponding to a portion of a three-dimensional object to be formed; and
d. repeating steps (a), optionally (b), and (c) a plurality of times to form a fused three-dimensional object.

Generally, additive manufacturing of thermoplastic elastomers can be challenging. The inventors have found that selecting a thermoplastic elastomer with the combination of mechanical properties and melting behavior disclosed herein enables improved additive manufacturing of articles with elastic properties.

Typically, thermoplastic elastomers have a broad melting peak, meaning that there is a large temperature difference between the melting onset temperature T_{m,onset} and the melting peak temperature T_{m,peak}. The inventors believe that this is one of the reasons why it is typically challenging to use thermoplastic elastomers for additive manufacturing processes that involve sintering. The inventors have found that powder compositions comprising a thermoplastic elastomer with a small difference between melting peak temperature and melting onset temperature are more suitable for additive manufacturing.

Preferably, in the powder composition that is used for the additive manufacturing process, T_{m,peak} minus T_{m,onset} is 30 °C or less, or 25 °C or less, or 20 °C or less, or from 5 to 30 °C, or from 5 to 25 °C, or from 5 to 20 °C, or from 10 to 30 °C , or from 10 to 25 °C, or from 10 to 20 °C. T_{m,peak} minus T_{m,onset} may be 20 °C or less, more preferably 18 °C or less or 15 °C or less, even more preferably 12 °C or less or 10 °C or less. T_{m,peak} minus T_{m,onset} might even be as low as 5 °C or less, but will typically be 1 °C or more, or 2 °C or more, or 3 °C or more. Assuming a constant crystallization onset temperature, a lower vale of T_{m,peak} minus T_{m,onset} results in a larger sinterability region.

Alternatively or additionally to the difference between T_{m,peak} and T_{m,onset}, the melting behavior of the powder may also be described in terms of the sinterability region or ΔT, which is defined as the melt onset temperature T_{m,onset} minus the crystallization onset temperature T_{c,onset}, wherein T_{m,onset} and T_{c,onset} are measured according to ISO 11357-1/3 (2009).

Preferably, the powder composition has a sinterability region of 5 °C or greater, more preferably 8 °C or greater, even more preferably 10 °C or greater, such as 15 °C or greater.

In order to obtain printed articles that are highly elastic, or rubbery, a powder composition comprising a thermoplastic elastomer is used. The mechanical properties of an article derived from such a powder composition depends on the properties of the powder composition, such as its chemical composition, as well as on the method in which the article is formed. For instance, there can be a difference in mechanical or elastic properties of articles that are produced using injection molding and articles that are produced using additive manufacturing. Typically, articles that are made using injection molding will be stronger than parts that are produced using additive manufacturing.

Different methods for manufacturing an article can also result in a difference in isotropy in the mechanical properties of the material. For instance, for articles that are produced by means of additive manufacturing processes, the direction along which certain elastic properties are measured can have a large influence on the measured value. Specifically, in articles that are produced by additive manufacturing, the material is typically stronger along the XY-directions, *i*.*e*., the directions along the plane of the sintered slices of the printed article, than in the Z-direction, *i*.*e*., the direction across the plane of the sintered slices. Unless otherwise indicated, the Young's modulus, the elongation-at-break, and the ultimate tensile stress, are measured by applying a force along one of the XY-directions of the printed article. In the case of measuring rebound resilience and Shore hardness, unless otherwise indicated, an impact or force is applied in the Z-direction, *i*.*e*., perpendicular to the plane of the sintered slices.

When it is described herein that a property of test article is measured according to a certain standard, this also includes that that the physical dimensions of said test article correspond to the dimensions as defined in that standard.

A test article printed from the powder composition may have a rebound resilience of 50 % or more as measured according to DIN 53512, preferably 60 % or more, or 70 % or more, even more preferably 75 % or more. In an alternative embodiment, the test article printed from the powder composition possesses a rebound resilience, when measured according to DIN 53512, from 50 to 100 %, or from 50 to 90 %, or from 60 to 100 %, or from 60 to 90 %, or from 70 to 100 %, or from 70 to 90 %.

Alternatively or in addition to being expressed in terms of rebound resilience, the elastic properties of a test article printed from the powder composition may be expressed using one or more other parameters, for instance using Young's modulus, elongation-at-break, ultimate tensile stress, and/or Shore hardness.

Preferably, a test article printed from the powder composition has a Young's modulus of 70 MPa or less, as measured according to ISO 527-1/2, more preferably 65 MPa or less, even more preferably 60 MPa or less, such as 50 MPa or less. The Young's modulus of a printed test article may be as low as 30 MPa or less, but will typically not be lower than 20 MPa. The Young's modulus may be 25-70 MPa, or 30-65 MPa, or 35-55 MPa, or 40-50 MPa.

Preferably, a test article printed from the powder composition has an elongation-at-break of 150 % or more, as measured according to ISO 527-1/2, more preferably 200 % or more, even more preferably 250 % or more. The elongation-at-break of a printed test article may be as high as 600 % or more, but will typically be lower than 700 %. The elongation-at-break may be 150-700 %, or 175-600 %, or 190-500 %, or 200-450 %, or 210-400 %, or 200-600 %, or 250-500 %.

A test article printed from the powder composition can have an ultimate tensile strength of 30 MPa or less, as measured according to ISO 527-1/2, for instance 25 MPa or less, such as 20 MPa or less. Preferably, the ultimate tensile strength of a printed test article is 5 MPa or higher, or 6 MPa or higher, or 7 MPa or higher. The test article may have an ultimate tensile strength of 5-30 MPa, or 5.5-25 MPa, or 6-20 MPa, or 6.5-15 MPa, such as 7-10 MPa.

In embodiments, the Shore D value of a test article printed from the powder composition is in the range of 10-50, or 20-40, such as 25-35. Alternatively or additionally, a test article printed from the powder composition may have a Shore A value of 65-100, or 75-95, such as 80-90.

There may be a correlation between one or more parameters describing the mechanical properties of a material. In particular, there may typically be a correlation between the rebound resilience of a material, and its Shore A and/or Shore D hardness.

The powder used in the additive manufacturing process may further comprise one or more additives. However, additives that may e.g. be used to improve flowability of the thermoplastic elastomer can have a negative influence on the elastic properties of the printed part. Therefore, the powder composition preferably comprises 90 % or more by total weight of the composition of thermoplastic elastomer, preferably 95 % or more, more preferably 99 % or more.

The additives may be selected from the group consisting of flow additives, antioxidants, colorants, NIR-absorbers and combinations thereof.

Examples of flow additives include fumed and precipitated silica (SiO₂), commercial examples of which include those sold under the Aerosil^{®} tradename from Evonik. Another example of a flow additive is calcium stearate.

Alternatively or additionally, the powder may comprise one or more antioxidants to prevent degradation because of influences of *e.g.* temperature, oxygen, UV and moisture. This can either be beneficial during the processing steps and/or in the end-use of produced parts.

The powder may also comprise dyes, colorants and/or NIR-absorbers. These additives can be added either for aesthetic reasons, or for making the powders suitable for 3D-printers that use IR lasers. An example of an additive that can for instance be used as colorant and/or NIR-absorber is carbon black.

The total amount of additives used is preferably 10 % or less, based on total weight of the composition, more preferably 5 % or less, even more preferably 2 % or less, such as 1 % or less.

According to a second aspect of the invention, there is provided a method of manufacturing a powder composition suitable for additive manufacturing sintering processes comprising the steps of:
(a) providing a starting material comprising a thermoplastic elastomer;
(b) heating the starting material of step (a) or the size-reduced material of step (c) to a temperature sufficient to increase the melting onset temperature of the material, thereby obtaining an annealed material; and
(c) reducing the size of the starting material of step (a) or the annealed material of step (b) into a powder having a D50 particle size value of 20-150 µm, thereby obtaining a size-reduced material,
wherein size reduction step (c) is performed before or after heating step (b).

The method of manufacturing a powder suitable for additive manufacturing sintering processes according to the second aspect of the invention is preferably performed on a starting material comprising a thermoplastic elastomer. Generally, sintering of thermoplastic elastomer powders is more difficult when the thermoplastic elastomer material becomes more elastic, or more rubbery. Therefore, the method according to the second aspect of the invention is especially suitable for thermoplastic elastomers which are highly elastic.

Size reduction step (c) may be performed before or after heating step (b). Preferably, size reduction step (c) is performed after heating step (b), because of challenges and hazards related to heating of powders.

Preferably, the thermoplastic elastomer used in the additive manufacturing process and/or in the method of manufacturing a powder is a block copolymer comprising one or more hard blocks and one or more soft blocks, because of the favorable elastic properties of such polymers.

In embodiments, the one or more hard blocks comprise a polyester, and/or the one or more soft blocks comprise polyether. Such materials are known for instance as thermoplastic copolyester (TPC), copolyester elastomer (COPE), and/or thermoplastic poly(ether-ester) (TPEE).

Preferably, the hard and/or soft blocks have a number average molecular weight (Mₙ) of 500 g/mol or more, such as 500-10 000 g/mol, 500-8000 g/mol, 500-6000 g/mol, or 500-5000 g/mol.

The melting temperature, and therefore also the sinterability region of the thermoplastic elastomer can be influenced by the amount of soft block. Preferably, the thermoplastic elastomer comprises 10-80 % of soft block relative to total the weight of the thermoplastic elastomer, more preferably 25-70 %, even more preferably 40-65 %.

The one or more hard blocks of the thermoplastic elastomer preferably comprise polyester. A polyester hard block is typically built from at least one alkanediol and at least one aromatic dicarboxylic acid or an ester thereof. Preferably, the alkanediol is chosen from the group consisting of ethylene glycol, propylene glycol and butanediol. More preferably, the alkylene diol is 1,4-butanediol. Examples of suitable dicarboxylic acids include terephthalic acid and isophthalic acid. The reaction product of 1,4-butanediol and terephthalic acid is commonly known as polybutylene terephthalate. Incorporation of isophthalic acid can be used to produce a hard block comprising a copolymer of polybutylene terephthalate and polybutylene isophthalate. By incorporating isophthalic acid in the hard block, the melting point of the thermoplastic elastomer, and as a consequence, also the sinterability region, will shift towards lower temperatures, compared to a hard block that only comprises terephthalic acid as dicarboxylic acid.

Preferably, the thermoplastic elastomer has a melting peak temperature of 200 °C or lower, preferably 190 °C or lower, more preferably 180 °C or lower, such as 170 °C or lower, even more preferably 165 °C or lower, such as 100-170 °C, or 120-165 °C, as measured according to ISO 11357-1/3. Low melting peak temperatures are preferred, because this means that additive manufacturing processes can be performed at lower temperatures. The melting peak temperature of the thermoplastic elastomer may be as low as 100 °C, but is preferably higher.

In order to prevent degradation by oxidation, step (b) is preferably performed in a gas atmosphere containing less than 5 % by volume of O₂, preferably less than 1 %, more preferably less than 0.5 %.

Without wishing to be bound by theory, the inventors believe that the change in melting behavior caused by annealing of the powder composition comprising the thermoplastic elastomer is related to a so-called temperature memory of the thermoplastic elastomer. If the powder is completely melted subsequent to the annealing step, the temperature memory of the thermoplastic elastomer will typically be erased, meaning that the melting behavior of the material will be more similar to its melting behavior before annealing. Therefore, in case the melting behavior of an annealed material is measured twice using DSC, the first heating curve will give different values compared to the second heating curve, because measuring the first heating curve in DSC typically includes complete melting of the material that is being measured. In ISO 11357-1/3, it is also recommended to perform two subsequent heating runs. The melting onset temperature of a material should therefore preferably be based on the first heating curve of a DSC measurement.

In figure 1, it can be seen that the effect of the annealing on the melting onset temperature can result in convolution of multiple peaks. This convolution of peaks may lead to an observed shift in melting peak temperature, even though the observed shift in melting peak temperature might be considered to be caused by a shift in the melting onset temperature rather than by an actual shift of the melting peak temperature. In order to avoid this, it is preferred to determine the melting peak temperature based on the second heating curve of a DSC measurement. T_{m,onset(1)} refers to the melting onset temperature taken from the first heating curve of a DSC measurement, whereas T_{m,onset(2)} refers to the melting onset temperature taken from the second heating curve of a DSC measurement. Analogously, T_{m,peak(1)} refers to the melting peak temperature taken from the first heating curve of a DSC measurement, whereas T_{m,peak(2)} refers to the melting peak temperature taken from the second heating curve of a DSC measurement.

If during the heating step the material is heated above the melting peak temperature, the material might partly or completely lose its thermal memory and/or excessive sticking of the material may occur. Therefore, the highest temperature of the heating step is preferably below the melting peak temperature.

However, if the highest temperature during the heat treatment is too far below the melting peak temperature, the effect of increasing the melting onset temperature of the material is only limited or even absent. Therefore, the highest temperature of the heat treatment is preferably 0-25 °C below the melting peak temperature of the material. More preferably, the highest temperature of the heat treatment is 1-20 °C, or 2-15 °C, or 5-10 °C below the melting peak temperature of the material.

During the heating step, the temperature should preferably not be raised too quickly. Especially in the temperature range between the initial melting onset temperature (*i.e*., the melting onset temperature of the material prior to the heating step) and the melting peak temperature, heating too quickly could result in excessive sticking of the material.

Therefore, at temperatures above the initial melting onset temperature, the heating step preferably comprises slowly and/or stepwise increasing the temperature of the material to a final temperature. Exact heating times and temperatures programs may be very dependent on equipment, heat transfer, starting material, and amount of material. By means of example, in case of stepwise increasing, the temperature may be increased in steps of 3-10 °C, with a hold time of 15-300 minutes per step. Instead of stepwise increasing the temperature, the temperature may also be increased at a slow rate of, for example, 0.01-0.5 °C/min.

A suitable technique for the size reduction step is cryogenic milling. Especially when size reduction is performed after the heating step, an advantage of cryogenic milling is that it does not involve melting or otherwise heating of the material, which could result in negating the effect of the heating step in case the size reduction step is performed after the heating step.

The heating step of the method of manufacturing a powder composition suitable for additive manufacturing sintering processes as described herein increases the melting onset temperature of the material. The degree to which the melting onset temperature is increased can be described using the difference between (T_{m,peak(2)} minus T_{m,onset(2)}) and (T_{m,peak(2)} minus T_{m,onset(1)}). Preferably, this difference is 5 °C or greater, more preferably 10 °C or greater, such as 15 °C or greater or 20 °C or greater. The difference may be for instance be 5-40 °C, or 7-35 °C, or 12-30 °C, or 15-25 °C.

Additives, such as the flow additives, antioxidants, colorants, and/or NIR-absorbers as described may be added during cryogenic milling. Alternatively or additionally, additives can also be added to the powder composition after the size reduction step by means of blending.

The powder composition obtained according to the method as described herein can be used for producing an article by sintering of the powder, for instance using SLS, or other powder based additive manufacturing processes, such as High Speed Sintering (HSS) and/or Multi Jet Fusion (MJF).

### Additional exemplary embodiments

A first aspect of a first additional exemplary embodiment of the invention is a method of manufacturing a powder composition suitable for additive manufacturing sintering processes comprising the steps of:
(a) providing a starting material comprising a thermoplastic elastomer;
(b) heating the starting material of step (a) or the size-reduced material of step (c) to a temperature sufficient to increase the melting onset temperature of the material, thereby obtaining an annealed material; and
(c) reducing the size of the starting material of step (a) or the annealed material of step (b) into a powder having a D50 particle size value of 20-150 µm, thereby obtaining a size-reduced material,
wherein size reduction step (c) is performed before or after heating step (b).

An additional aspect of the first additional exemplary embodiment is a method according to the previous aspect, wherein step (b) is performed in a gas atmosphere containing less than 5 % by volume of O₂, preferably less than 1 %, more preferably less than 0.5 %.

An additional aspect of the first additional exemplary embodiment is a method according to either of the two previous aspects of the first additional exemplary embodiment, wherein the highest temperature of the heat treatment is 0-25 °C below, or 1-25 °C below, or 5-25 °C below, or 10-25 °C below, or 15-25 °C below, or 20-25 °C below, or 1-20 °C below, or 1-15 °C below, or 1-10 °C below, or 1-5°C below the melting peak temperature of the starting material.

An additional aspect of the first additional exemplary embodiment is a method according to any of the previous aspects of the first additional exemplary embodiment, wherein step (c) comprises cryogenic milling.

An additional aspect of the first additional exemplary embodiment is a method according to any of the previous aspects of the first additional exemplary embodiment, followed by a step of:
(d) producing an article by sintering of the obtained powder composition.

An additional aspect of the first additional exemplary embodiment is a method according to any of the previous aspects of the first additional exemplary embodiment, wherein the thermoplastic elastomer is a block copolymer comprising one or more hard blocks and one or more soft blocks.

An additional aspect of the first additional exemplary embodiment is a method according to any of the previous aspects of the first additional exemplary embodiment, wherein the one or more hard blocks comprise polyester, preferably polybutylene terephthalate, and/or wherein the one or more soft blocks comprise polyether.

An additional aspect of the first additional exemplary embodiment is a method according to any of the previous aspects of the first additional exemplary embodiment, wherein the thermoplastic elastomer comprises 10-80 wt.% of the one or more soft blocks, relative to the weight of the thermoplastic elastomer.

An additional aspect of the first additional exemplary embodiment is a method according to any of the previous aspects of the first additional exemplary embodiment, wherein the one or more hard blocks comprise polybutylene terephthalate, polybutylene isophthalate, and/or copolymers thereof.

An additional aspect of the first additional exemplary embodiment is a method according to any of the previous aspects of the first additional exemplary embodiment, wherein the resulting powder composition has a melting onset temperature T_{m,onset} and a melting peak temperature T_{m,peak}, which are measured according to ISO 11357-1/3 (2009), and wherein T_{m,peak} minus T_{m,onset} is 30 °C or less, or 25 °C or less, or 20 °C or less, or from 5 to 30 °C, or from 5 to 25 °C, or from 5 to 20 °C, or from 10 to 30 °C, or from 10 to 25 °C, or from 10 to 20 °C.

An additional aspect of the first additional exemplary embodiment is a method according to any of the previous aspects of the first additional exemplary embodiment, wherein a test article 3D-printed from the powder composition has a rebound resilience of 50 % or more, measured according to DIN 53512.

An additional aspect of the first additional exemplary embodiment is a method according to any of the previous aspects of the first additional exemplary embodiment, wherein a test article 3D-printed from the powder composition has a Young's modulus of 70 MPa or less, measured according to ISO 527-1/2.

An additional aspect of the first additional exemplary embodiment is a method according to any of the previous aspects of the first additional exemplary embodiment, wherein a test article 3D-printed from the powder composition has an ultimate tensile strength of 30 MPa or less, measured according to ISO 527-1/2.

An additional aspect of the first additional exemplary embodiment is a method according to any of the previous aspects of the first additional exemplary embodiment, wherein a test article 3D-printed from the powder composition has a Shore D hardness of 10-50, measured according to ISO R 868/DIN 53505.

An additional aspect of the first additional exemplary embodiment is a method according to any of the previous aspects of the first additional exemplary embodiment, wherein a test article 3D-printed from the powder composition has an elongation-at-break of 150 % or more, measured according to ISO 527-1/2.

An additional aspect of the first additional exemplary embodiment is a method according to any of the previous aspects of the first additional exemplary embodiment, wherein the starting material has a melting peak temperature of 200 °C or lower, preferably 190 °C or lower, more preferably 180 °C or lower, such as 100-170 °C, or 120-165 °C.

An additional aspect of the first additional exemplary embodiment is a method according to any of the previous aspects of the first additional exemplary embodiment, wherein a test article made from the starting material, for instance using injection molding has one or more of the following properties:
- a rebound resilience of 50 % or more, measured according to DIN 53512.
- a Young's modulus of 70 MPa or less, measured according to ISO 527-1/2.
- an ultimate tensile strength of 30 MPa or less, measured according to ISO 527-1/2.
- a Shore D hardness of 10-50, measured according to ISO R 868/DIN 53505.
- an elongation-at-break of 150 % or more, measured according to ISO 527-1/2.

An additional aspect of the first additional exemplary embodiment is a method according to any of the previous aspects of the first additional exemplary embodiment, wherein the difference between (T_{m,peak(2)} minus T_{m,onset(2)}) and (T_{m,peak(2)} minus T_{m,onset(1)}) is 5 °C or more, preferably 10 °C or more, more preferably 15 °C or more, such as 5-40 °C.

A first aspect of a second additional exemplary embodiment of the invention is an additive manufactured article having a rebound resilience of 50 % or more, measured according to DIN 53512, obtainable by an additive manufacturing process as described herein.

### Examples

### Example 1. Powder preparation

### TPE-A1

Granules of TPE-A, a thermoplastic elastomer with a hard block comprising polybutylene terephthalate and a poly(tetramethylene ether) glycol soft block with a melting point of 160 °C and a shore A hardness value of 92 were annealed in a tumble dryer under inert atmosphere. After establishing the inert atmosphere in the tumble dryer and a gradual warm-up phase to a wall temperature of 135 °C, the temperature in the tumble dryer was increased stepwise. With every step, the temperature of the wall of the tumble drier was increased with 5 °C and the temperature was maintained for 2 hours. After reaching a granulate temperature of 145 °C and maintaining that temperature for another 2 hours, the tumble dryer was cooled down to a temperature below 60 °C and the annealed granules were collected. The total effective time of annealing was approximately 8 hours.

Subsequently, the annealed granules were cryogenically milled to form a powder with a defined particle size distribution (PSD), measured by laser diffraction (equipment: Sympatec HELOS; standard: ISO 13320), making the material suitable to be processed in a powder bed fusion type of additive manufacturing technique.

During the cryogenic milling, fumed silica flow additives were added to the material to improve the flowability of the powder. The composition, PSD and densities of the resulting powder are presented in tables 1 and 2. Free bulk density (FBD) was measured according to ASTM D1895 and tapped bulk density (TBD) was measured using the same equipment as used for measuring FBD, after exposing the powder to a vibrating unit with an amplitude of 0.2 mm.

### TPE-A2

TPE-A2 was prepared in the same way as TPE-A1. The composition, PSD and densities of the resulting powder are presented in tables 1 and 2.

### TPE-A3

TPE-A3 was prepared in the same way as TPE-A1 and TPE-A2, except that the PSD resulting from cryogenic milling was slightly different from TPE-A1 and TPE-A2. The composition, PSD and densities of the resulting powder are presented in tables 1 and 2.

### TPE-A4

TPE-A4 was prepared in the same way as TPE-A1 to TPE-A3, except that the material was not annealed. The composition, PSD and densities of the resulting powder are presented in tables 1 and 2.

### TPE-B1

TPE-B1 was prepared in the same way as TPE-A4, except that granules of a thermoplastic elastomer comprising a polybutylene terephthalate hard block and an olefinic soft block derived from rapeseed oil, with a melting point of 158 °C and a shore D hardness value of 34 were used. The composition, PSD and densities of the resulting powder are presented in tables 1 and 2.

### TPE-C1

TPE-C1 was prepared in the same way as TPE-A4 and TPE-B1, except that granules of a thermoplastic elastomer comprising a polybutylene terephthalate hard block and a poly(tetramethylene ether) glycol soft block, with a melting point of 195 °C and a shore D hardness of 33 were used. The composition, PSD and densities of the resulting powder are presented in tables 1 and 2.

**Table 1. Powder composition**

| TPE- | A1 | A2 | A3 | A4 | B1 | C1 |
|---|---|---|---|---|---|---|
| TPE [wt. %] | 99.6 | 99.6 | 99.6 | 99.6 | 99.6 | 99.6 |
| Aerosil^{®} R972 [wt.%] | 0.1 | 0.1 | 0.1 | 0.1 | 0.1 | 0.1 |
| Aerosil^{®} 200 [wt.%] | 0.1 | 0.1 | 0.1 | 0.1 | 0.1 | 0.1 |
| Aerosil^{®} R812 [wt.%] | 0.2 | 0.2 | 0.2 | 0.2 | 0.2 | 0.2 |

**Table 2. Particle size distribution and density**

| TPE- | A1 | A2 | A3 | A4 | B1 | C1 |
|---|---|---|---|---|---|---|
| D10 [µm] | 42 | 42 | 31 | 44 | 32 | 31 |
| D50 [µm] | 97 | 97 | 68 | 98 | 71 | 69 |
| D90 [µm] | 166 | 162 | 118 | 165 | 121 | 120 |
| FBD [kg/m³] | 433 | 406 | 377 | 393 | 392 | 370 |
| TBD [kg/m³] | 548 | 505 | 441 | 459 | 490 | 448 |

### Example 2. Part manufacturing

### Additive manufacturing

Parts were made from the samples TPE-A1 - TPE-A4, TPE-B1 and TPE-C1 using a Prodways P2000ST 3D printer equipped with a 100W CO₂ laser and a counter rotating roller as recoating system. The machine was operated at elevated temperature and under N₂ atmosphere. The most important print parameters are summarized in table 3 below.

**Table 3. Print parameters**

| TPE- | A1-A4 | B1 | C1 |
|---|---|---|---|
| Part temperature [°C] | 125 | 105-115 | 150 |
| Layer thickness [mm] | 0.12 | 0.12 | 0.12 |
| Fill laser power [W] | 40-50 | 40-50 | 40-50 |
| Fill scan count [-] | 2 | 2 | 2 |
| Contour laser power [W] | 10 | 10 | 10 |
| Contour count [-] | 2 | 2 | 2 |
| Fill speed [mm/s] | 12700 | 12700 | 12700 |
| Contour speed [mm/s] | 2743 | 2743 | 2743 |
| Warm-up and cool-down height [mm] | 5 or 10 | 5 or 10 | 5 or 10 |

### Injection molding

Using injection molding, parts were produced of thermoplastic elastomer TPE-A, which is the same base resin that was used to produce samples TPE-A1 to TPE-A4. Prior to injection molding, the material was dried at 120 °C for 6 hours in a vacuum oven with N₂-inlet. Injection molding was done using an Arburg allrounder 470C/1500-350 machine with a screw diameter of 40 mm. The temperature at the entry zone was 40 °C. The temperature close to the hopper was set to 180 °C, increasing gradually in 4 zones towards the nozzle, where the temperature was set to 200 °C. The mold temperature was set to 50 °C. Plaques of 100 × 100 mm with a thickness of ca. 6 mm were injection molded, with an injection speed of 150 mm/s, an effective holding pressure of 300 bar, a holding time of 90 s, a cooling time of 20 s, and a clamp force of 150 t.

### Example 3. DSC-measurement of powders

The difference between TPE-A1 and TPE-A2 on the one side, and TPE-A4 on the other side is that producing TPE-A4 did not include a heating step. Using differential scanning calorimetry (DSC), the melting onset temperature T_{m,onset} and melting peak temperature T_{m,peak}, were measured according to ISO 11357-1/3 (2009).

In a typical measurement, samples of 5-8 mg mass are weighed with a precision balance and encapsulated in (crimped) aluminum pans of known mass. The pans are covered with a pre-pierced (50 µm hole) cover for allowing the atmosphere in the pan to be refreshed during the experiment. An identical empty pan is used as a reference. Nitrogen is purged at a rate of 50 mL min⁻¹. Heating-cooling-heating cycles at 10 K/min, in the range -90-250 °C, were performed for determining the parameters that numerically characterize the thermal behavior of the investigated materials.

The melting peak temperatures of the first (T_{m,peak(1)}) and second heating run (T_{m,peak(2)}) are defined as the temperature corresponding to the highest melting peak of the respective run. The melting onset temperature of the respective heating runs, T_{m,onset (1)} and T_{m,onset(2)}, are defined as the temperature corresponding to the intercept of the tangent at the inflection point of the highest melting peak and the tangent of the baseline, which baseline can be determined by a person skilled in the art. The procedure for determining the melt onset temperature based on a DSC curve is illustrated in figure 1.

Even though typically T_{m,peak(1)} and T_{m,peak(2)} are similar, it is preferred to use T_{m,peak(2)} for determination of the difference between melting onset and peak melting temperatures, since this peak is less obscured by thermal history artefacts. Consequently, the effect of annealing is best expressed by the difference between (T_{m,peak(2)} - T_{m,onset(2)}) and (T_{m,peak(2)} - T_{m,onset(1)}).

The results are shown in table 4, and clearly show that the onset of melting shifts to higher temperatures because of the annealing step. Figure 1 shows DSC traces of an annealed and a non-annealed powder.

**Table 4. Thermal properties**

| TPE- | A1 | A2 | A4 |
|---|---|---|---|
| Thermal treatment | Annealed | Annealed | No thermal treatment |
| T_{m,onset(1)} [°C] | 150 | 148 | 114 |
| T_{m,peak(1)} [°C] | 157 | 157 | 160 |
| Tm,onset(2) [°C] | 124 | 124 | 126 |
| T_{m,peak(2)} [°C] | 162 | 162 | 161 |
| T_{m,peak(2)} - T_{m,onset(1)} [°C] | 12 | 14 | 47 |
| T_{m,peak(2)} - T_{m,onset(2)} [°C] | 38 | 38 | 35 |

### Example 4. Effect of thermal treatment on the printing process

Using TPE-A1, TPE-A2 and TPE-A4, exactly the same additive manufacturing build was executed, meaning that the same parts were built from the different samples at the same location and using the same build-, part- and scaling-parameters. Hollow cubes with inside dimensions of approximately 40 × 40 × 40 mm were printed.

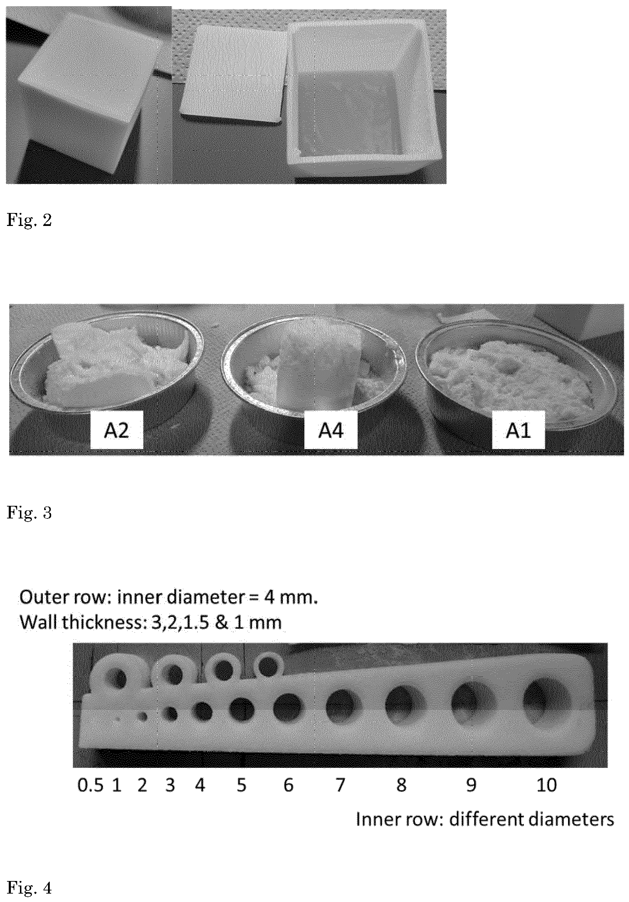

After the build was finished the parts were cooled down until the part bed temperature was below 60 °C and the cake was taken out of the printer. Then another full day was waited before breaking out the parts to ensure that the complete cake was at room temperature. The outside of the cubes was carefully cleaned manually using a nail brush and finally with compressed air. The cubes were weighed and the lids were removed. The cubes were emptied manually and the powder was collected. Figures 2 and 3 illustrate the process. Visual inspection of the collected powder shows that the powder inside the cube in the case of TPE-A4 is more caked compared to the two other samples TPE-A1 and TPE-A2, as can be seen in figure 3. The empty cubes and lids were cleaned and weighed. The differences in mass is used to estimate the powder density inside the build. These values are incorporated in table 5.

The particle size distribution (PSD) of the collected powder was determined using laser diffraction. The results are shown in table 5. It is shown that the collected powder for TPE-A4, which did not have any thermal treatment before printing, is coarser compared to the TPE-A1 and TPE-A2, which both did undergo an annealing step. This indicates that the annealing prevents the severe caking that is observed for TPE-A4, in which powder particles are sticking more to each other, leading to coarser particles. When comparing PSD values of the samples before printing (see table 2) to the PSD values of the collected powders after printing, it is shown that TPE-A1 has a very similar PSD before and after printing and TPE-A2 has become only slightly coarser, which is a good indication that these powders are suitable to be used in subsequent builds.

**Table 5. Powder properties after printing**

| TPE- | A1 | A2 | A4 |
|---|---|---|---|
| Powder density inside printed cubes [kg/m³] | 438 | 396 | 392 |
| D10 [µm] | 44 | 49 | 53 |
| D50 [µm] | 96 | 101 | 114 |
| D90 [µm] | 166 | 178 | 200* |

| | | | |
|---|---|---|---|
| *Coarse particles probably exceeding the measuring range | | | |

### Example 5. Cleanability test

A cleanability test was performed in order to assess the effect of the heat treatment on cleanability of the printed parts. In this test, parts with openings of different sizes were printed from samples TPE-A1, TPE-A2 and TPE-A4. An example of such a printed part can be seen in figure 4. For each sample, two test parts were made in one build. One part was made close to the outside of the build area and the other part was located more in the center (inside) of the build. Temperature influences on a part on the outside of the build will be less stringent compared to a part on the inside of the build. The outsides of the parts were carefully cleaned using a nail brush and by gently tapping the parts on a table. None of the samples revealed openings after this first cleaning step. In the next step, the openings were cleaned using compressed air, followed by a final cleaning step in which the parts were cleaned by glass bead blasting. The size of the smallest opening that could be observed in the printed parts after cleaning using compressed air as well as using glass bead blasting was determined, and the results are shown in table 6. Referring to figure 4, in case of the inner row openings, if the smallest opening of the test part that can be observed after cleaning is smaller, this indicates that the part is easier to clean. In case of the outer row openings, the wall thickness should be considered. If the thickest wall of the test part that can be cleaned is thicker, this indicates that the part is easier to clean. Comparing the cleanability of the three samples in the in the cleanability test, it can be concluded that in general, the thermal treatment leads to printed parts that are more easily cleaned.

**Table 6. Cleanability test results**

| | TPE- | A1 | | A2 | | A4 | |
|---|---|---|---|---|---|---|---|
| | Location of test part in the build | outside | inside | outside | inside | outside | inside |
| After cleaning with compressed air | Smallest hole that could be cleaned [mm] (inner row) | 4 | 5 | 4 | 5 | 7 | 9 |
| | Thickest wall that could be cleaned [mm] (outer row) | 3 | 1 | 3 | none | none | none |
| After cleaning by glass bead basting | Smallest hole that could be cleaned [mm] (inner row) | 1 | 2 | 2 | 2 | 4 | 5 |
| | Thickest wall that could be cleaned [mm] (outer row) | 3 | 3 | 3 | 3 | 3 | 1.5 |

### Example 6. Mechanical properties.

The mechanical properties of printed parts made from annealed and non-annealed samples using the print parameters as described in table 3 were measured and are summarized in table 7. No clear differences are seen in the mechanical properties between the annealed and non-annealed samples. Print orientation is XY for all measured samples. The Young's modulus, ultimate tensile strength, and elongation-at-break were measured according to ISO 527-1/2, the rebound resilience was measured according to DIN 53512, and the shore A hardness was measured according to ISO R 868/DIN 53505.

**Table 7. Mechanical properties* of additive manufactured parts**

| TPE- | A1 | A2 | A4 |
|---|---|---|---|
| Young's modulus; XY [MPa] | 46 | 49 | 47 |
| Ultimate tensile strength; XY [MPa] | 7.9 | 8.7 | 8.2 |
| Elongation-at-break, max; XY [%] | 218 | 291 | 268 |
| Rebound resilience "R"; XY [%] | 77 | 77 | 76 |
| Shore A hardness (3s) | 88 | 88 | 88 |

| | | | |
|---|---|---|---|
| *all parts were printed with a laser power of 40W, the values are an average of two or three measurements | | | |

### Example 7. Comparison of different thermoplastic elastomers

Samples TPE-A3, TPE-B1 and TPE-C1 were used to print parts according to the print parameters described in table 3. Print orientation of all samples was XY. The Young's modulus, ultimate tensile strength, and elongation-at-break were measured according to ISO 527-1/2, the rebound resilience was measured according to DIN 53512, and the shore A hardness was measured according to ISO R 868/DIN 53505. The results are summarized in table 8. The general datasheet values are values reported in the data sheet of the thermoplastic elastomer and serve to indicate that the different thermoplastic elastomer have similar Shore hardness. Regarding melting properties, TPE-B1 has a similar melting point compared to TPE-A3, despite having a soft block of a different chemical nature and TPE-C1 has a higher melting point compared to A3, although the chemical nature of the soft block is similar.

**Table 8. Mechanical properties* of the different TPEs**

| | TPE- | A3 | B1 | | C1 |
|---|---|---|---|---|---|
| General datasheet values of thermoplastic elastomer | Tm [°C] | 160 | 158 | | 195 |
| | Shore D [-] | 33 | 34 | | 33 |
| | Soft block [chemical nature] | polyether | olefinic | | polyether |
| Properties of printed parts | Print temperature [°C] | 125 | 105 | 115 | 150 |
| | Young's modulus; XY [MPa] | 40 | 21 | 31 | 47 |
| | Ultimate tensile strength; XY [MPa] | 7.4 | 3.6 | 5.3 | 9.0 |
| | Elongation -a t-break, max; XY [%] | 262 | 67 | 81 | 267 |
| | Rebound resilience "R"; XY [%] | 74 | 59 | 60 | 75 |
| | Shore A hardness (3s) | 88 | 82 | 83 | 88 |

| | | | | | |
|---|---|---|---|---|---|
| *all parts were printed with a laser power of 40W, the values are an average of two or three measurements | | | | | |

### Example 8. Effect of manufacturing method on mechanical properties

The rebound resilience of 3D printed parts from TPE-A1 and injection molded parts of TPE-A, which were produced as described in example 3, was measured. The results are shown in table 9.

**Table 9. Rebound resilience of TPE samples prepared using different manufacturing methods**

| TPE- | A | A1 |
|---|---|---|
| Manufacturing process | Injection molding | Additive manufacturing (3D printing) |
| Thickness of 2 specimens (plaques) stacked [mm] | 12.46 | 12.63 |
| Rebound resilience "R" [%] | 75 | 76 |

## Claims

1. An additive manufacturing process for producing a printed article, comprising the step of sintering a powder composition comprising a thermoplastic elastomer,
wherein the powder composition has a melting onset temperature T_{m,onset} and a melting peak temperature T_{m,peak}, which are measured according to ISO 11357-1/3 (2009), wherein T_{m,peak} minus T_{m,onset} is 30 °C or less; and
wherein a test article printed from the powder composition has a rebound resilience of 50 % or more, measured according to DIN 53512.

2. Process according to claim 1, wherein the thermoplastic elastomer is a block copolymer comprising one or more hard blocks and one or more soft blocks.

3. Process according to claim 2, wherein the one or more hard blocks comprise polyester, preferably polybutylene terephthalate, and/or wherein the one or more soft blocks comprise polyether.

4. Process according to claim 2 or 3, wherein the thermoplastic elastomer comprises 10-80 wt.% of the one or more soft blocks, relative to the weight of the thermoplastic elastomer.

5. Process according to any one of claims 2-4, wherein the one or more hard blocks comprise polybutylene terephthalate, polybutylene isophthalate, and/or copolymers thereof.

6. Process according to any one of the previous claims, wherein the thermoplastic elastomer has a melting peak temperature of 200 °C or lower, preferably 190 °C or lower, more preferably 180 °C or lower, such as 100-170 °C, or 120-165 °C.

7. Process according to any one of the previous claims, wherein the powder composition comprises 90 % or more by total weight of the composition of thermoplastic elastomer, preferably 95 % or more, more preferably 99 % or more.

8. Process according to any one of the previous claims, wherein the powder composition further comprises one or more additives selected from the group consisting of flow additives, antioxidants, colorants, NIR-absorbers, and combinations thereof.

9. Process according to any one of the previous claims, wherein a test article printed from the powder composition has a Young's modulus of 70 MPa or less, measured according to ISO 527-1/2.

10. Process according to any one of the previous claims, wherein a test article printed from the powder composition has an ultimate tensile strength of 30 MPa or less, measured according to ISO 527-1/2.

11. Process according to any one of the previous claims, wherein a test article printed from the powder composition has a Shore D hardness in the range of 10-50, measured according to ISO R 868/DIN 53505.

12. Process according to any one of the previous claims, wherein a test article printed from the powder composition has an elongation-at-break of 150 % or more, measured according to ISO 527-1/2.

13. Process according to any one of the previous claims, wherein the powder composition has a sinterability region ΔT, which is defined as the melt onset temperature T_{m,onset} minus the crystallization onset temperature T_{c,onset}, wherein T_{m,onset} and T_{c,onset} are both measured according to ISO 11357-1/3 (2009), wherein the sinterability region is 5 °C or greater.

14. A powder composition comprising a thermoplastic elastomer suitable for additive manufacturing sintering processes, having an melting onset temperature T_{m,onset} and a melting peak temperature T_{m,peak}, which are measured according to ISO 11357-1/3 (2009), and wherein T_{m,peak} minus T_{m,onset} is 30 °C or less, wherein a test article printed from the powder composition has a rebound resilience of 50 % or more, measured according to DIN 53512.

15. A method of manufacturing a powder composition suitable for additive manufacturing sintering processes comprising the steps of:
(a) providing a starting material comprising a thermoplastic elastomer;
(b) heating the starting material of step (a) or the size-reduced material of step (c) to a temperature sufficient to increase the melting onset temperature of the material, thereby obtaining an annealed material; and
(c) reducing the size of the starting material of step (a) or the annealed material of step (b) into a powder having a D50 particle size value of 20-150 µm, thereby obtaining a size-reduced material,
wherein size reduction step (c) is performed before or after heating step (b).
